# EUROPEAN PATENT SPECIFICATION

(11) **EP 4 196 766 B1**
(45) Date of publication and mention of the grant of the patent: **08.05.2024**
(21) Application number: 21737691.2
(22) Date of filing: 05.07.2021
(51) Int. Cl.: G01N 15/06, G01N 15/10, G01N 21/27, G01N 21/65, G01N 15/00

(54) **METHOD TO DETERMINE THE MASS OF PARTICLES COLLECTED ON A COLLECTION MEMBRANE**
VERFAHREN ZUR BESTIMMUNG DER MASSE VON PARTIKELN, DIE AUF EINER SAMMELMEMBRAN GESAMMELT WERDEN
PROCÉDÉ POUR DÉTERMINER LA MASSE DE PARTICULES COLLECTÉES SUR UNE MEMBRANE DE COLLECTE

(30) Priority: 17.08.2020 EP 20191271
(43) Date of publication of application: 21.06.2023
(73) Proprietor: Stat Peel AG, 8750 Glarus (CH)
(72) Inventor: BIERI, Ruedi, 8750 Glarus (CH); ORAZIETTI, Margherita, 8006 Zürich (CH); MANOLE, Mihaela, 8805 Richterswil (CH)
(74) Representative: Frischknecht, Harry Ralph
(86) International application number: PCT/EP2021/068485
(87) International publication number: WO 2022/037838

(56) References cited:
- WO-A1-2016/150991
- DE-A1-102012 211 538
- US-A1- 2009 081 804
- US-B1- 7 333 190
- Hannah Mason: "CAMX 2018 preview: Stat Peel", CompositesWorld, 13 September 2018 (2018-09-13), XP055771591, Retrieved from the Internet: URL:https://www.compositesworld.com/articl es/camx-2018-preview-stat-peel [retrieved on 2021-02-03]
- D Schmid ET AL: "System for Airborne Nanofibers Exposure Monitoring", CSEM Scientific and Technical Report 2016, 7 March 2017 (2017-03-07), XP055771582, Retrieved from the Internet: URL:https://www.csem.ch/Doc.aspx?id=44893 [retrieved on 2021-02-03]

## Description

### TECHNICAL FIELD

The present invention relates to a method to determine the mass of particles collected on a collection membrane according to claim 1.

### PRIOR ART

Today's advances in man-made nanomaterials pose new and unprecedented risks to employees along the whole value chain. Especially airborne, inhalable fiber-shaped nanomaterials like carbon nanotubes (CNTs), carbon nanofibers (CNFs) and graphene nanoplatelets (GNPs) pose asbestos-like health risks when inhaled.

WO 2016/150991 of the applicant discloses a device as well as a system in order to determine the long-term exposure to nanoparticles, in particular small oblong nanoparticles, such as carbon nanotubes or the like.

The device as well as the system according to WO 2016/150991 provide very good measurement results. However, in certain applications the particles and their behavior once collected on the surface of the membrane may lead to an inaccurate result. For example, particles with high absorption, particles having a larger size or aggregated particles may lead to a loss of the excitation light of the spectrometer and this may cause inaccuracy in the determination of the mass.

### SUMMARY OF THE INVENTION

It is therefore an object of the present invention to provide a method and/or a device which overcomes the drawbacks of prior art. In particular it is an object of the present invention to provide a method and/or a device, which has an enhanced accuracy of measurement, in particular for particles which influence the measurement result. Such particles are for example particles with a high absorption, particles having a larger size or aggregated particles.

This object is solved by the method of claim 1. The method according to claim 1 serves to determine the mass of particles collected on a collection membrane having a first surface and a second surface, whereby the particles to be analysed are deposited on the first surface.

In a first step the particles of the first surface are scanned with a Raman spectrometer and a preliminary Raman signal is collected.

The particles are preferably nanoparticles. The term nanoparticles includes but is not limited to at least one or a combination of the following: carbon nanotubes and/or carbon nanofibers and/or carbon nanoplatelets and/or PM2.5 and/or PM10 and other nanotubes and nanofibers. Said particles are conveyed in a fluid. The term fluid refers preferably to air or any other fluid.

In a second step at least one additional physical property of the particles is determined. The term physical property is to be understood as a property of the particles that is measurable. Preferably a sensor unit is arranged to determine said at least one additional physical property.

In a third step a correction factor is calculated based on the additional physical property.

In a fourth step a final Raman signal is calculated based on the correction factor and the preliminary Raman signal in order to determine the actual mass of the particles.

In a fifth step the actual mass of the particles is determined based on the final Raman signal.

With the consideration of the at least one additional physical property the mass of the particles can be determined with a higher accuracy. This in particular in view of the fact that with the at least one additional physical property, the eventual loss of excitation light of the Raman spectrometer caused by for example particles with a high absorption, particles having a larger size or aggregated particles can be taken into account.

According to the claimed invention, the physical property is least one optical property of the particles. In particular the at least one optical property is an absorption property and/or a transmission property.

Preferably the collection membrane has determined optical properties and wherein said optical property of the particles is determined by collecting the optical property of the particles by a sensor unit which is arranged on the side of the second surface and an optical value is determined. In the third step a correction factor is calculated based on the optical value, and in the fourth step the final Raman signal is calculated based on the correction factor and the preliminary Raman signal in order to determine the actual mass in the fifth step.

Preferably the correction factor is obtained by comparing the measured optical value with a calibrated optical value.

Preferably the relationship between the intensity and the mass and the calibrated optical value are determined by a calibration step, whereby the calibration step comprises:
- deposing a determined mass of pure material on first surface of the membrane;
- collecting a Raman signal of said determined mass of pure material;
- determining the mathematical function that correlates the intensity of the collected Raman signal to the mass for the specific material, and
- measuring the optical property of the pure material to obtain said calibrated optical value.

The mathematical function is preferably a linear function whereby the Raman signal is directly proportional to the mass of the pure material. The linear function is preferably defined as follows: Raman Signal = Mass x Constant.

The pure material has preferably the form of evenly dispersed particles. The evenly dispersed particles have the advantage that the absorption of the excitation light is minimized.

Preferably before the third step a comparison is made between the measured optical value and the optical value of the pure material. When the measured optical value is within the range expected for the pure material, the correction factor is set to a value of 1. When the measured optical value is not within the expected range, the correction factor is calculated as the ratio between the measured optical value and the optical value of the pure material. Preferably the complete surface or an acquisition area or a plurality of acquisition points is scanned.

In the first variant the complete surface of the collection membrane is scanned in the first step and wherein the complete surface of the collection membrane is taken into account to determine the additional physical property.

In a second variant an acquisition area on the surface of the collection membrane is scanned in the first step and wherein the acquisition area of the collection membrane is taken into account to determine the additional physical property. The acquisition covers a part of the whole surface of the membrane.

In a third variant a plurality of acquisition points on the surface of the collection membrane is scanned in the first step and wherein the plurality of acquisition points surface of the collection membrane is taken into account to determine the additional physical property.

Preferably the third step and the fourth step and the fifth are carried out by computer.

The membrane is provided with a material having physical properties allowing light to pass through the membrane from the first surface to the second surface. The membrane is preferably an optically transparent membrane.

A device to determine the mass of particles collected on a collection membrane, according to a method as described above comprises
a holding structure to hold the collection membrane having a first surface and a second surface, whereby the particles to be analysed are deposited on the first surface,
a Raman spectrometer with a laser configured to scan the particles of the first surface and to collect a preliminary Raman signal,
a sensor unit configured to determine at least one additional physical property of the particles, wherein the additional physical property is at least one optical property of the particles (P), said at least one optical property being an absorption property and/or a transmission property, and
a computer configured to calculate a correction factor based on the additional physical property, and to calculate a final Raman signal based on the correction factor and the preliminary Raman signal in order to determine the actual mass of the particles.

For the determination of the optical property the sensor unit is an optical sensor unit configured to determine an optical property of the particles, wherein the optical sensor is preferably arranged on the side of the second surface of the collection membrane.

A computer program product comprising instructions, which, when the program is executed by a computer, causes the device as described herein to carry out the steps of the method as described herein.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a first embodiment of a system that is preferably operated by the method as described; and
- Fig. 2: a schematic flow diagram of a step of a preferred method.

### DESCRIPTION OF PREFERRED EMBODIMENTS

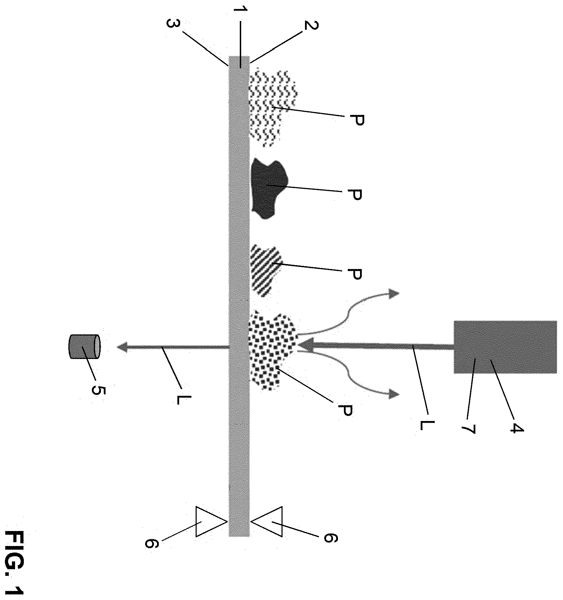

Figure 1 shows a device to determine the mass of particles P. The device comprises a holding structure 6 that is configured to hold a collection membrane 1. The particles P are collected on a collection membrane 1. The collection membrane 1 has a first surface 2 and a second surface 3. The particles P to be analyzed are deposited on the first surface 2. In order to analyze the particles P, the collection membrane 1 is place into the holding structure.

The device further comprises a Raman spectrometer 4 with a light emitting unit 7 configured to scan the particles P of the first surface 2 and to collect a preliminary Raman signal Rp. The device further comprises a sensor unit 5 configured to determine at least one additional physical property of the particles P. The additional physical property is additional to preliminary Raman signal Rp or the mass of the particles that is determined based on the preliminary Raman signal Rp. The sensor unit 5 in the embodiment is arranged on the side of the second surface 3 of the collection membrane 1. In the present embodiment the sensor unit is an optical sensor unit 5. The optical sensor unit 5 is configured to determine said additional physical property which is an optical property of the particles P.

The device further comprises a computer that is not shown in the figures. The computer is configured to calculate a correction factor CF based on the additional physical property, and to calculate a final Raman signal Rf based on the correction factor CF and the preliminary Raman signal Rp in order to determine the actual mass of the particles P.

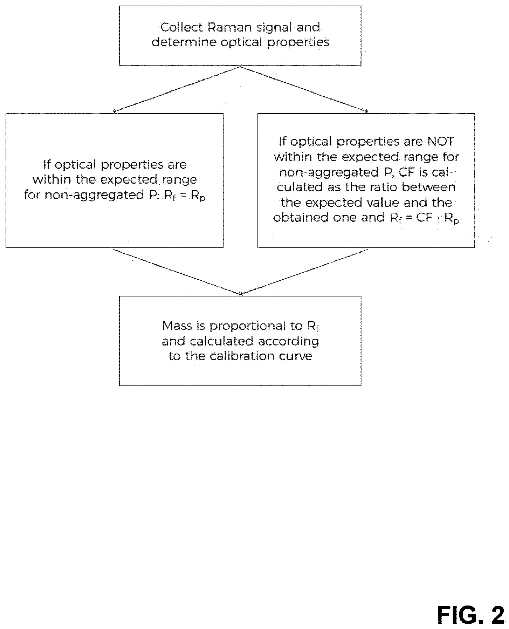

According to the invention, the device is operated by a method as explained in the following. The method could also be executed by a different device. The method is illustrated in figure 2. The method serves to determine the mass of particles P collected on the collection membrane 1, whereby the particles P are deposited on the first surface 2. The method comprises the following steps:
- In a first step the particles P of the first surface 2 are scanned with the Raman spectrometer 4 and a preliminary Raman signal Rp is collected.
- In a second step at least one additional physical property of the particles P is determined.
- In a third step a correction factor CF is calculated based on the additional physical property.
- In a fourth step a final Raman signal Rf is calculated based on the correction factor CF and the preliminary Raman signal Rp.
- In a fifth step the actual mass of the particles P is determined based on the final Raman signal Rf.

The steps are preferably executed in the respective order. The second step is executed after the first step, the third step is executed after the second step, the fourth step is executed after the third step and the fifth step is executed after the fourth step. The third, fourth and fifth step are preferably conducted by a computer and a computer program. In other variants, it may also be possible that some of the steps are performed at the same time. In particular, it may be possible to execute the first and the second step at the same time.

The additional physical property is an optical property of the particles P. This shown in figure 1. Light L as emitted from the light emitting unit 7 of the Raman spectrometer is transmitted through the collection membrane 1. The sensor unit 5 measures an absorption property and/or a transmission property and/or any other property related to the interaction of the particles P with light as provided by the Raman spectrometer.

The collection membrane 1 has determined optical properties and said optical property of the particles P is determined by collecting the optical property of the particles P by a sensor unit 5 which is arranged on the side of the second surface 3 and an optical value OV is determined, wherein in the third step a correction factor CF is calculated based on the optical value OV, and wherein in the fourth step the final Raman signal Rf is calculated based on the correction factor CF and the preliminary Raman signal Rp in order to determine the actual mass in the fifth step.

The correction factor CF is obtained by comparing the measured optical value OV with a calibrated optical value COV.

The calibrated optical value COV is determined by a calibration step, whereby the calibration step comprises:
- deposing a determined mass of pure material on first side of the membrane;
- collecting a Raman signal of said determined mass of pure material;
- determining the mathematical function that correlates the intensity of the collected Raman signal to the mass for the specific material, and
- measuring the optical property of the pure material to obtain said calibrated optical value COV.

Preferably before the third step a comparison is made between the measured optical value and the optical value of the pure material, wherein if the measured optical value is within the range expected for the optical value of the pure material the correction factor CF is set to a value of 1; and wherein if the measured optical value is not within the expected range of the optical value of the pure material the correction factor CF is calculated as the ratio between the measured optical value and the optical value of the pure material.

Preferably the complete surface of the collection membrane is scanned in the first step and wherein the complete surface of the collection membrane is taken into account to determine the additional physical property. Alternatively, an acquisition area or a plurality of acquisition points on the surface of the collection membrane is scanned in the first step and wherein the acquisition area or the plurality of acquisition points surface of the collection membrane is taken into account to determine the additional physical property.

Preferably, the optical sensor and the Raman spectrometer are arranged in a fixed position with regard to each other. In order to scan the membrane 1, the membrane 1 is moved relative with regard to the optical sensor and the Raman spectrometer.

A computer program product comprising instructions which, when the program is executed by a computer, cause the computer to carry out the steps of the method as described herein.

### LIST OF REFERENCE SIGNS

- 1: collection membrane
- 2: first surface
- 3: second surface
- 4: Raman spectrometer
- 5: sensor unit
- 6: holding structure
- 7: light emitting unit
- L: Light
- P: Particles

## Claims

1. Method to determine the mass of particles (P) collected on a collection membrane (1) having a first surface (2) and a second surface (3), whereby the particles (P) to be analysed are deposited on the first surface (2),
wherein in a first step the particles (P) of the first surface (2) are scanned with a Raman spectrometer (4) and a preliminary Raman signal (Rp) is collected,
wherein in a second step at least one additional physical property of the particles (P) is determined, wherein the additional physical property is at least one optical property of the particles (P), said at least one optical property being an absorption property and/or a transmission property,
wherein in a third step a correction factor (CF) is calculated based on the additional physical property,
wherein in a fourth step a final Raman signal (Rf) is calculated based on the correction factor (CF) and the preliminary Raman signal (Rp), and
wherein in a fifth step the actual mass of the particles (P) is determined based on the final Raman signal (Rf).

2. Method according to claim 1, wherein the collection membrane (1) has determined optical properties and wherein said at least one optical property of the particles (P) is determined by collecting the optical property of the particles (P) by a sensor unit (5) which is arranged on the side of the second surface (3) and an optical value (OV) is determined,
wherein in the third step a correction factor (CF) is calculated based on the optical value (OV), and
wherein in the fourth step the final Raman signal (Rf) is calculated based on the correction factor (CF) and the preliminary Raman signal (Rp) in order to determine the actual mass in the fifth step.

3. Method according to claim 2, wherein the correction factor (CF) is obtained by comparing the measured optical value (OV) with a calibrated optical value (COV).

4. Method according to claim 3, wherein the calibrated optical value (COV) is determined by a calibration step, whereby the calibration step comprises:
- deposing a determined mass of pure material on first surface (2) of the membrane (1);
- collecting a Raman signal of said determined mass of pure material;
- determining the mathematical function that correlates the intensity of the collected Raman signal to the mass for the specific material, and
- measuring the optical property of the pure material to obtain said calibrated optical value (COV).

5. Method according to claim 4,
wherein before the third step a comparison is made between the measured optical value (OV) and the optical value of the pure material,
wherein if the measured optical value (OV) is within the range expected for the optical value of the pure material the correction factor (CF) is set to a value of 1; and
wherein if the measured optical value (OV) is not within the expected range of the optical value of the pure material the correction factor (CF) is calculated as the ratio between the measured optical value (OV) and the optical value of the pure material.

6. Method according to any one of the preceding claims,
wherein the complete surface of the collection membrane (1) is scanned in the first step and wherein the complete surface of the collection membrane (1) is taken into account to determine the additional physical property; or
wherein an acquisition area or a plurality of acquisition points on the surface of the collection membrane (1) is scanned in the first step and wherein the acquisition area or the plurality of acquisition points surface of the collection membrane is taken into account to determine the additional physical property.

7. Method according to any of the preceding claims, wherein the third step and the fourth step and the fifth step are carried out by computer.

8. Device to determine the mass of particles (P) collected on a collection membrane (1), according to a method as claimed in one of the preceding claims, wherein said device comprises
a holding structure (6) to hold a collection membrane having a first surface (2) and a second surface (3), whereby the particles (P) to be analysed are deposited on the first surface (2),
a Raman spectrometer with a light emitting unit (7) configured to scan the particles (P) of the first surface (2) and to collect a preliminary Raman signal (Rp),
a sensor unit (5) configured to determine at least one additional physical property of the particles (P), wherein the additional physical property is at least one optical property of the particles (P), said at least one optical property being an absorption property and/or a transmission property, and
a computer configured to calculate a correction factor (CF) based on the additional physical property, and to calculate a final Raman signal (Rf) based on the correction factor (CF) and the preliminary Raman signal (Rp) in order to determine the actual mass of the particles (P).

9. Device according to claim 8, wherein the sensor unit (5) is an optical sensor unit configured to determine said at least one optical property of the particles (P), wherein the optical sensor unit is arranged on the side of the second surface (3) of the collection membrane (1).

10. A computer program product comprising instructions which, when the program is executed by a computer, causes the device of claims 8 or 9 to carry out the steps of the method of claim 7.

## Patentansprüche

1. Verfahren zur Bestimmung der Masse von Partikeln (P), die auf einer Sammelmembran (1) mit einer ersten Oberfläche (2) und einer zweiten Oberfläche (3) gesammelt werden, wobei die zu analysierenden Partikel (P) auf der ersten Oberfläche (2) abgelagert werden,
wobei in einem ersten Schritt die Partikel (P) der ersten Oberfläche (2) mit einem Raman-Spektrometer (4) gescannt werden und ein vorläufiges Raman-Signal (Rp) gesammelt wird,
wobei in einem zweiten Schritt mindestens eine zusätzliche physikalische Eigenschaft der Partikel (P) bestimmt wird, wobei die mindestens eine zusätzliche physikalische Eigenschaft mindestens eine optische Eigenschaft der Partikel (P) ist, wobei die optische Eigenschaft eine Absorptionseigenschaft und/oder eine Transmissionseigenschaft ist,
wobei in einem dritten Schritt ein Korrekturfaktor (CF) auf der Grundlage der zusätzlichen physikalischen Eigenschaft berechnet wird,
wobei in einem vierten Schritt ein endgültiges Raman-Signal (Rf) auf der Grundlage des Korrekturfaktors (CF) und des vorläufigen Raman-Signals (Rp) berechnet wird, und
wobei in einem fünften Schritt die tatsächliche Masse der Partikel (P) auf der Grundlage des endgültigen Ramansignals (Rf) bestimmt wird.

2. Verfahren nach Anspruch 1, wobei die Sammelmembran (1) bestimmte optische Eigenschaften aufweist und wobei die mindestens eine optische Eigenschaft der Partikel (P) bestimmt wird, indem die optische Eigenschaft der Partikel (P) durch eine Sensoreinheit (5), die auf der Seite der zweiten Oberfläche (3) angeordnet ist, erfasst wird und ein optischer Wert (OV) bestimmt wird,
wobei im dritten Schritt auf der Grundlage des optischen Wertes (OV) ein Korrekturfaktor (CF) berechnet wird, und
wobei im vierten Schritt das endgültige Raman-Signal (Rf) auf Basis des Korrekturfaktors (CF) und des vorläufigen Raman-Signals (Rp) berechnet wird, um im fünften Schritt die tatsächliche Masse zu bestimmen.

3. Verfahren nach Anspruch 2, wobei der Korrekturfaktor (CF) durch Vergleich des gemessenen optischen Wertes (OV) mit einem kalibrierten optischen Wert (COV) erhalten wird.

4. Verfahren nach Anspruch 3, wobei der kalibrierte optische Wert (COV) durch einen Kalibrierungsschritt bestimmt wird, wobei der Kalibrierungsschritt umfasst:
- Aufbringen einer bestimmten Masse an reinem Material auf die erste Oberfläche (2) der Membran (1);
- Sammeln eines Raman-Signals der bestimmten Masse des reinen Materials;
- Bestimmen der mathematischen Funktion, die die Intensität des gesammelten Raman-Signals mit der Masse für das spezifische Material korreliert, und
- Messen der optischen Eigenschaft des reinen Materials, um den kalibrierten optischen Wert (COV) zu erhalten.

5. Verfahren nach Anspruch 4,
wobei vor dem dritten Schritt ein Vergleich zwischen dem gemessenen optischen Wert (OV) und dem optischen Wert des reinen Materials durchgeführt wird,
wobei, wenn der gemessene optische Wert (OV) innerhalb des für den optischen Wert des reinen Materials erwarteten Bereichs liegt, der Korrekturfaktor (CF) auf einen Wert von 1 gesetzt wird; und
wobei, wenn der gemessene optische Wert (OV) nicht innerhalb des erwarteten Bereichs des optischen Werts des reinen Materials liegt, der Korrekturfaktor (CF) als das Verhältnis zwischen dem gemessenen optischen Wert und dem optischen Wert des reinen Materials berechnet wird.

6. Verfahren nach einem der vorhergehenden Ansprüche,
wobei im ersten Schritt die gesamte Oberfläche der Sammelmembran (1) abgetastet wird und wobei die gesamte Oberfläche der Sammelmembran (1) zur Bestimmung der zusätzlichen physikalischen Eigenschaft herangezogen wird; oder
wobei im ersten Schritt ein Erfassungsbereich oder eine Mehrzahl von Erfassungspunkten auf der Oberfläche der Sammelmembran (1) abgetastet wird und wobei der Erfassungsbereich oder die Mehrzahl von Erfassungspunkten auf der Oberfläche der Sammelmembran (1) zur Bestimmung der zusätzliche physikalischen Eigenschaft herangezogen wird.

7. Verfahren nach einem der vorhergehenden Ansprüche, wobei der dritte Schritt und der vierte Schritt und der fünfte Schritt durch einen Computer durchgeführt werden.

8. Vorrichtung zur Bestimmung der Masse von auf einer Sammelmembran (1) gesammelten Partikeln (P), nach einem Verfahren gemäß einem der vorangehenden Ansprüche, wobei die Vorrichtung umfasst
eine Haltestruktur (6) zum Halten einer Sammelmembran mit einer ersten Oberfläche (2) und einer zweiten Oberfläche (3), wobei die zu analysierenden Partikel (P) auf der ersten Oberfläche (2) abgelagert werden,
ein Raman-Spektrometer mit einer lichtemittierenden Einheit (7), die so konfiguriert ist, dass sie die Partikel (P) der ersten Oberfläche (2) abtastet und ein vorläufiges Raman-Signal (Rp) erfasst,
eine Sensoreinheit (5), die konfiguriert ist, um mindestens eine zusätzliche physikalische Eigenschaft der Partikel (P) zu bestimmen, wobei die zusätzliche physikalische Eigenschaft mindestens eine optische Eigenschaft der Partikel (P) ist, wobei die mindestens eine optische Eigenschaft eine Absorptionseigenschaft und/oder eine Transmissionseigenschaft ist, und
einen Computer, der so konfiguriert ist, dass er einen Korrekturfaktor (CF) auf der Grundlage der zusätzlichen physikalischen Eigenschaft berechnet und ein endgültiges Raman-Signal (Rf) auf der Grundlage des Korrekturfaktors (CF) und des vorläufigen Raman-Signals (Rp) berechnet, um die tatsächliche Masse der Teilchen (P) zu bestimmen.

9. Vorrichtung nach Anspruch 8, wobei die Sensoreinheit (5) eine optische Sensoreinheit ist, die konfiguriert ist, um besagte mindestens eine optische Eigenschaft der Partikel (P) zu bestimmen, wobei die optische Sensoreinheite auf der Seite der zweiten Oberfläche (3) der Sammelmembran angeordnet ist.

10. Computerprogrammprodukt, das Anweisungen enthält, die, wenn das Programm von einem Computer ausgeführt wird, die Vorrichtung nach Anspruch 8 oder 9 veranlassen, die Schritte des Verfahrens nach Anspruch 7 auszuführen.

## Revendications

1. Procédé pour déterminer la masse de particules (P) collectées sur une membrane collectrice (1) ayant une première surface (2) et une seconde surface (3), dans lequel les particules (P) à analyser sont déposées sur la première surface (2),
dans lequel dans une première étape les particules (P) de la première surface (2) sont balayées avec un spectromètre Raman (4) et un signal Raman préliminaire (Rp) est collecté,
dans lequel dans une deuxième étape au moins une propriété physique supplémentaire des particules (P) est déterminée, dans lequel la propriété physique supplémentaire est au moins une propriété optique des particules (P), ladite au moins une propriété optique étant une propriété d'absorption et/ou une propriété de transmission,
dans lequel dans une troisième étape un facteur de correction (CF) est calculé sur la base de la propriété physique supplémentaire,
dans lequel dans une quatrième étape un signal Raman final (Rf) est calculé sur la base du facteur de correction (CF) et du signal Raman préliminaire (Rp), et
dans lequel, dans une cinquième étape, la masse réelle des particules (P) est déterminée sur la base du signal Raman final (Rf).

2. Procédé selon la revendication 1, dans lequel la membrane collectrice (1) a des propriétés optiques déterminées et dans lequel ladite au moins une propriété optique des particules (P) est déterminée en collectant la propriété optique des particules (P) par une unité de capteur (5) qui est disposée sur le côté de la deuxième surface (3) et une valeur optique (OV) est déterminée,
dans lequel, dans la troisième étape, un facteur de correction (CF) est calculé sur la base de la valeur optique (OV), et
dans lequel dans la quatrième étape, le signal Raman final (Rf) est calculé sur la base du facteur de correction (CF) et du signal Raman préliminaire (Rp) afin de déterminer la masse réelle dans la cinquième étape.

3. Procédé selon la revendication 2, dans lequel le facteur de correction (CF) est obtenu en comparant la valeur optique (OV) mesurée avec une valeur optique calibrée (COV).

4. Procédé selon la revendication 3, dans lequel la valeur optique calibrée (COV) est déterminée par une étape d'étalonnage, l'étape d'étalonnage comprenant :
- déposer une masse déterminée de matériau pur sur la première surface (2) de la membrane (1) ;
- collecter un signal Raman de ladite masse déterminée de matériau pur ;
- déterminer la fonction mathématique qui corrèle l'intensité du signal Raman collecté à la masse du matériau spécifique, et
- mesurer la propriété optique du matériau pur pour obtenir ladite valeur optique calibrée (COV).

5. Procédé selon la revendication 4, dans lequel avant la troisième étape une comparaison est effectuée entre la valeur optique mesurée (OV) et la valeur optique du matériau pur,
dans lequel si la valeur optique mesurée (OV) est dans la plage attendue pour la valeur optique du matériau pur, la facteur de correction (CF) est fixé à la valeur 1 ; et
dans lequel si la valeur optique mesurée (OV) n'est pas dans la plage attendue pour la valeur optique du matériau pur, le facteur de correction (CF) est calculé comme le rapport entre la valeur optique mesurée (OV) et la valeur optique du matériau pur.

6. Procédé selon l'une quelconque des revendications précédentes,
dans lequel la surface complète de la membrane collectrice (1) est balayée dans la première étape et dans lequel la surface complète de la membrane collectrice (1) est prise en compte pour déterminer la propriété physique supplémentaire ; ou
dans lequel une zone d'acquisition ou une pluralité de points d'acquisition sur la surface de la membrane collectrice (1) est balayée dans la première étape et dans lequel la zone d'acquisition ou la pluralité de points d'acquisition sur la surface de la membrane collectrice est prise en compte pour déterminer la propriété physique supplémentaire.

7. Procédé selon l'une quelconque des revendications précédentes, dans lequel la troisième étape, la quatrième étape et la cinquième étape sont réalisées par ordinateur.

8. Dispositif pour déterminer la masse de particules (P) collectées sur une membrane collectrice (1), selon un procédé selon l'une des revendications précédentes, dans lequel ledit dispositif comprend
une structure de maintien (6) pour maintenir une membrane collectrice ayant une première surface (2) et une seconde surface (3), grâce à quoi les particules (P) à analyser sont déposées sur la première surface (2),
un spectromètre Raman doté d'une unité électroluminescente (7) configurée pour balayer les particules (P) de la première surface (2) et pour collecter un signal Raman préliminaire (Rp),
une unité de capteur (5) configurée pour déterminer au moins une propriété physique supplémentaire des particules (P), dans lequel la propriété physique supplémentaire est au moins une propriété optique des particules (P), ladite au moins une propriété optique étant une propriété d'absorption et/ou une propriété de transmission, et
un ordinateur configuré pour calculer une facteur de correction (CF) sur la base de la propriété physique supplémentaire, et pour calculer un signal Raman final (Rf) sur la base du facteur de correction (CF) et du signal Raman préliminaire (Rp) afin de déterminer la masse réelle des particules (P).

9. Dispositif selon la revendication 8, dans lequel l'unité de capteur (5) est une unité de capteur optique configurée pour déterminer ladite au moins une propriété optique des particules (P), dans lequel l'unité de capteur optique est disposé du côté de la deuxième surface (3) de la membrane collectrice (1).

10. Produit programme informatique comprenant des instructions qui, lorsque le programme est exécuté par un ordinateur, amènent le dispositif selon la revendication 8 ou 9 à exécuter les étapes du procédé selon la revendication 7.
